Europäisches Patentamt

European Patent Office

Office européen des brevets

(11) Veröffentlichungsnummer: **0 231 871**
A2

(12) **EUROPÄISCHE PATENTANMELDUNG**

(21) Anmeldenummer: **87101173.0**

(22) Anmeldetag: **28.01.87**

(51) Int. Cl.³: **A 47 J 41/02**

(30) Priorität: **05.02.86 DE 3603528**

(43) Veröffentlichungstag der Anmeldung:
**12.08.87 Patentblatt 87/33**

(84) Benannte Vertragsstaaten:
**CH GB LI**

(71) Anmelder: **Rotpunkt Dr. Anso Zimmermann**
**Industriestrasse**
**D-6434 Niederaula / Bad Hersfeld(DE)**

(72) Erfinder: **Zimmermann, Anso, Dr.**
**Königsbergerstrasse 11**
**D-6434 Niederaula(DE)**

(74) Vertreter: **Körber, Wolfhart, Dr. et al,**
**Patentanwälte Dipl.-Ing. H. Mitscherlich Dipl.-Ing. K.**
**Gunschmann Dr.rer.nat. W. Körber Dipl.Ing. J.**
**Schmidt-Evers Dipl.-Ing. W. Melzer Steinsdorfstrasse 10**
**D-8000 München 22(DE)**

(54) **Kanne mit einem von ihrem Kopfteil ausgehenden Ausgiesser.**

(57) Bei einer Kanne mit einem Gehäuse (1), von dessen Kopfteil (3) ein Ausgießer (4) ausgeht, und mit einem in das Kopfteil (3) einsetzbaren Deckel (13) der in seiner Offenstellung zum Ausgießen nur einen Teil der Füll- und Ausgießöffnung (8) der Kanne freigibt, soll ein sauberes Ausgießen gewährleistet sein. Hierzu wird vorgeschlagen, an den oberen Rändern (21) der einander zugewandten Seitenwände (19) des Ausgießers (4) je einen sich längs des Randes (21) erstreckenden Vorsprung (22) anzuordnen.

FIG.1

## Kanne mit einem von ihrem Kopfteil ausgehenden Ausgießer

Die Erfindung bezieht sich auf eine Kanne nach dem Oberbegriff des Anspruchs 1.

Bei einer Kanne dieser Art, die allgemein bekannt ist, braucht der Deckel zum Ausgießen des Kanneninhalts nicht aus dem Kopfteil entfernt zu werden, sondern er kann im Kopfteil verbleiben, wobei er allerdings in eine Offenstellung zu bringen ist, in der er einen Teil der Füll- und Ausgießöffnung freigibt. Bei der gattungsgemäßen Art sind mehrere Deckelkonstruktionen möglich. Es kann sich um einen Schraubdeckel oder einen sog. Expansionsstopfen handeln, der in seiner Schließstellung die Füll- und Ausgießöffnung schließt und seiner Offenstellung sich in einem Abstand oberhalb der Füll- und Ausgießöffnung befindet. Es sind auch Konstruktionen bekannt geworden, bei denen der Deckel immer in einer bestimmten Einsetzposition verbleibt und die Füll- und Ausgießöffnung durch ein besonderes Verschlußglied zu öffnen oder zu schließen ist, das im Deckel beweglich geführt und durch eine besondere Handhabe zu betätigen ist. Es sind auch noch weitere gattungsgemäße Konstruktionen bekannt, bei denen der Deckel selbst sich immer in seiner Schließstellung befindet, wobei ein durch den Deckel hindurchgehender Ausgießkanal durch ein besonderes, im Deckel angeordnetes Verschlußglied wahlweise zu schließen und zu öffnen ist.

Bei den zuerst beschriebenen Bauarten gibt der Deckel in seiner Offenstellung einen ringförmigen Spalt oberhalb der Füll- und Ausgießöffnung frei, wodurch sich unter Berücksichtigung der Schrägstellung der Kanne beim Ausgießen ein sichelförmiger Ausgießspalt einstellt. Bei der zuletzt beschriebenen Art stellt sich beim Ausgießen ein Flüssigkeitsstrahl ein, der durch die Querschnittsform des durch den Deckel hindurchgeführten Ausgießkanals vorbestimmt ist.

Bei der gattungsgemäßen Art stellen sich beim Ausgießen Schwierigkeiten ein, die darin bestehen, daß Flüssigkeit über die Seitenwände des Ausgießers hinausläuft, was zu einer Verschmutzung der Gehäuseaußenfläche oder auch der Umgebung führt.

Das vorliegende Problem ist darauf zurückzuführen, daß sich beim Vorbeiströmen der Flüssigkeit am Deckel Ablöseschwierigkeiten einstellen, die Strömungsturbulenzen und das Überlaufen an den Seitenwänden des Ausgießers herbeiführen.

Bei Konstruktionen, bei denen der Deckel in seiner Offenstellung einen sichelförmigen Ausgießspalt freigibt, stellen sich zuzüglich auch noch Stromschnellen ein, die zur vorliegenden Problematik beitragen.

Vorliegende Schwierigkeiten können bei einem Deckel mit hindurchgeführtem Ausgießkanal auch darauf beruhen, daß der Deckel sich nicht exakt in einer Stellung befindet, in der der Ausgießkanal mit dem Ausgießer fluchtet und deshalb der Flüssigkeitsstrom einseitig in den Ausgießer gelangt. Diese Schwierigkeit kann sich insbesondere dann leicht einstellen, wenn es sich um einen Schraubdeckel handelt, dessen Schließstellung nicht eindeutig definiert ist, weil diese sich aus dem Drehmoment ergibt, mit dem der Deckel zugeschraubt ist.

Die vorbeschriebenen Schwierigkeiten stellen sich auch bei Isolierkannen der gattungsgemäßen Bauart ein und zwar insbesondere bei einer üblichen Bauart, bei der die Füll- und Ausgießöffnung durch eine innere Schulter des Gehäuses oder des Kopfteils begrenzt ist, gegen die unterseitig der Isoliereinsatz mit Spannung dicht anliegt und die an ihrer Oberseite eine Beschleunigungsstrecke darstellt, auf der insbesondere beim Vorhandensein eines sichelförmigen Ausgießquerschnitts Teilströmungen nicht parallel zum Ausgießer, sondern strahlenförmig divergierend verlaufen, wodurch sich an den Seitenwänden des Ausgießers vergrößerte Strömungsmengen einstellen, die ebenfalls zu der eingangs schon beschriebenen Schwierigkeit führen können.

Der Erfindung liegt die Aufgabe zugrunde, eine Kanne der eingangs bezeichneten Bauart so auszugestalten, daß ein sauberes Ausgießen gewährleistet ist.

Diese Aufgabe wird durch die im Kennzeichen des Anspruchs 1 enthaltenen Merkmale gelöst.

Bei der erfindungsgemäßen Ausgestaltung werden sowohl aufgrund von Stromschnellen als auch Wirbelströmen hervorgerufene Strömungen begrenzt und zum freien Ende der Schnaupe hin gerichtet, wodurch ein Überlaufen der Flüssigkeit über die oberen Ränder der Seitenwände hinaus verhindert wird und somit ein sauberes Ausgießen gewährleistet ist.

Dabei erweist sich die erfindungsgemäße Ausgestaltung als besonders einfach, weil die erfindungsgemäßen Vorsprünge sich sowohl hinsichtlich ihrer Form als auch des erforderlichen Materialaufwandes leicht und preiswert herstellen lassen. Dies gilt insbesondere für Kannen, deren Gehäuse bzw. Kopfteil aus Kunststoff besteht.

4

In diesem Falle lassen sich die Vorsprünge in einfacher Weise einstückig anformen.

Im Gegensatz zur erfindungsgemäßen Ausgestaltung sind ansich bekannte geschlossene Schnaupen, d.h. rohrförmige Ausgießer, nicht nur materialintensiv, sondern sie sind auch schwierig herzustellen, weil unter Beachtung einer strömungsgünstigen Form des Ausgießkanals Entformungsprobleme des die geschlossene Schnaupe formenden Kerns vorgegeben sind. Außerdem läßt sich eine geschlossene Schnaupe nur mit besonderen Reinigungsmaßnahmen und deshalb erschwert reinigen, was bei der erfindungsgemäßen Ausgestaltung aufgrund des offenen Ausgießers nicht der Fall ist.

Die Begrenzung bzw. Beeinflussung der Strömung in Richtung auf das freie Ende der Schnaupe kann durch eine besondere Formgebung der mit der Strömung in Kontakt tretenden Flächen der Vorsprünge günstig beeinflußt werden. Eine jeweilige günstige Formgebung hängt davon ab, welche Art von Strömungen gegen die Seitenwände des Ausgießers strömen. Ebene Begrenzungsflächen des Ausgießers und der Vorsprünge eignen sich gut, die Strömung zu begrenzen, während gerundete Begrenzungsflächen eine verbesserte Umlenkung der Strömung zum freien Ende der Schnaupe hin ermöglichen. Im Rahmen der Erfindung können die Begrenzungsflächen der Seitenwände der Schnaupe und der Vorsprünge verschiedene Formen haben.

Weitere vorteilhafte Weiterbildungen der Erfindung sind in den Unteransprüchen beschrieben.

Nachfolgend wird die Erfindung anhand von in Zeichnungen dargestellten bevorzugten Ausführungsbeispielen beschrieben. Es zeigen:

Fig. 1 einen senkrechten Teilschnitt durch das Oberteil einer erfindungsgemäß ausgestalteten Kanne mit Deckel;

Fig. 2 eine Draufsicht auf die Kanne bei entferntem Deckel;

Fig. 3 den Schnitt III-III in Fig. 2.

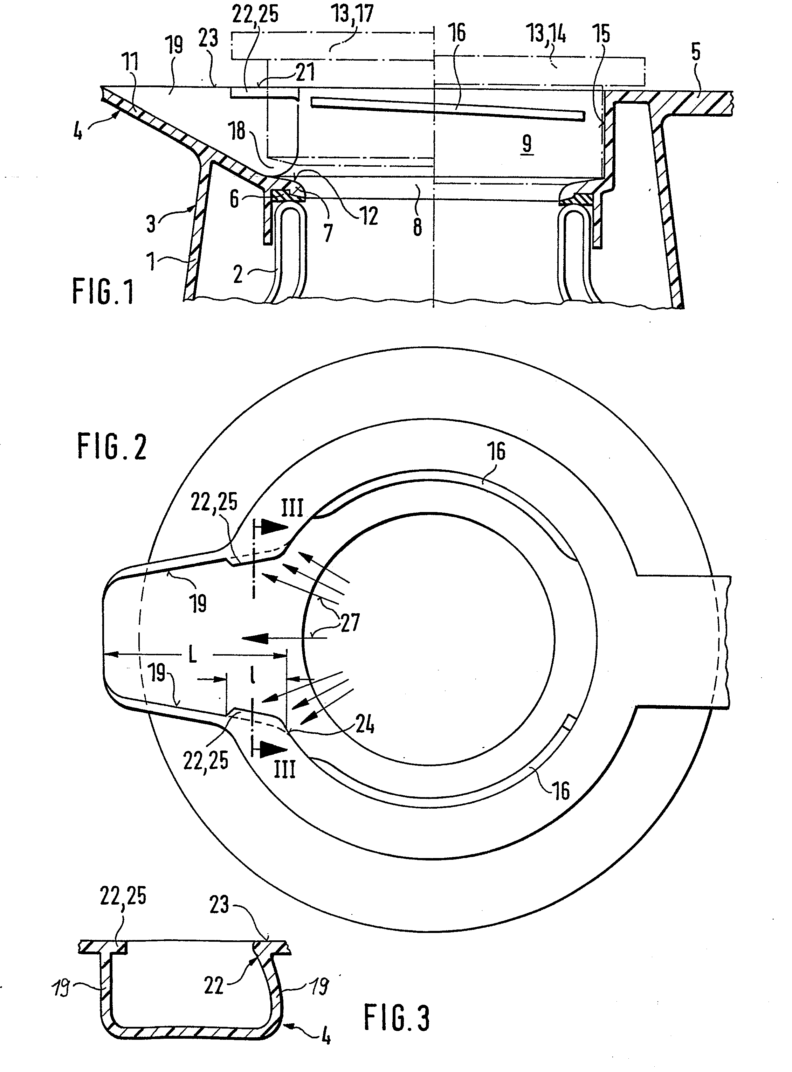

Bei der dargestellten Kanne handelt es sich um eine Isolierkanne mit einem Gehäuse 1 aus Kunststoff, in dem ein die Flüssigkeit aufnehmender Isoliereinsatz 2 aufgenommen ist. Von dem Gehäuse ist in Fig. 1 nur das Kopfteil 3 dargestellt, das sowohl ein einstückiges Teil des Gehäuses als auch ein separates Teil sein kann, das auf ein Mantelteil des Gehäuses aufgesetzt und befestigt ist. Das Kopfteil 3 weist einen Ausgießer 4 und diametral gegenüberliegend einen Griff 5 auf, der nur andeutungsweise dargestellt ist.

Der Isoliereinsatz 2 liegt mit Spannung unter Zwischenlage einer Dichtung 6 unterseitig an einer inneren Schulter 7 des Kopfteils 3 an, wobei er in dieser Position durch ein nichtdargestelltes Bodenteil des Gehäuses 1 gehalten sein kann, das mit dem Gehäuse 1 schraubbar verbunden sein kann.

Die Schulter 7 begrenzt die Füll- bzw. Ausgießöffnung 8 der Kanne. Oberseitig der Schulter 7 befindet sich eine runde Ausnehmung 9 im Kopfteil 3, von der der Ausgießer 4 so ausgeht, daß die Grundwand 11 des Ausgießers 4 an die Oberseite 12 der Schulter 7 anschließt.

Der andeutungsweise dargestellte Deckel 13 liegt in seiner unteren Schließstellung 14 mit einer unterseitigen Dichtfläche auf der Schulter 7 auf, so daß letztere gleichzeitig eine Dichtung darstellt. Es handelt sich um einen Schraubdeckel, der mit dem nicht dargestellten Außengewinde in bezüglich des Ausgießers 4 seitlich an der Innenwand 15 der Ausnehmung 9 angeformten Innengewindesegmenten 16 einschraubbar ist. In der oberen, mit 17 bezeichneten Offenstellung des Deckels 13 gibt dieser einen ringförmigen Ausgießspalt 18 frei, der in der gekippten Ausgießstellung der Kanne einen etwa sichelförmigen Ausgießspalt ergibt.

Die mit 19 bezeichneten Seitenwände des Ausgießers 4 erstrecken sich etwa senkrecht. An den oberen Rändern 21 der Seitenwände 19 befinden sich im hinteren Bereich des Ausgießers 4 Vorsprünge 22 in Form von Stegen, die mit Oberseite 23 des Kopfteils 3 abschließen. Die Vorsprünge 22 beginnen an den Ecken 24, die durch die gegenseitige Durchdringung der innenseitigen Kontur des Ausgießers 4 und der Ausnehmung 9 gebildet sind. Die Ecken 24 sind aus strömungstechnischen Gründen vorzugsweise gerundet. Die Länge 1 der mit 25 bezeichneten Stege, die beim vorliegenden Ausführungsbeispiel einen viereckigen Querschnitt haben, beträgt etwa ein Drittel der Länge L des Ausgießers 4. Im Rahmen der Erfindung ist es natürlich auch möglich, die Vorsprünge 22 länger zu bemessen. Die zur Spitze des Ausgießers 4 weisenden Enden der Vorsprünge 22 sind stumpf abgeschrägt, während die innenseitigen Enden gerundet sind.

Die Vorsprünge 22 stellen Barrieren für Strömungen dar, die aufgrund von Stromschnellen oder Wirbelströmungen beim Ausgießen an den Seitenwänden des Ausgießers hochschnellen. Die Vorsprünge 22 begrenzen nicht nur diese Strömungen, sondern sie lenken die Strömungen auch zum freien Ende des Ausgießers 4 hin. Infolgedessen

wird ein Überlaufen über die oberen Ränder 21 der Seitenwände 19 hinaus verhindert und ein sauberes Ausgießen gewährleistet.

In Fig. 2 ist verdeutlicht, daß insbesondere der hintere Bereich der Seitenwände 19 bezüglich eines Überlaufens gefährdet ist. Dies wird darauf zurückgeführt, daß in diesem Bereich sich verhältnismäßig große Strömungsmengen konzentrieren, deren Strömungsrichtung strahlenförmig divergiert, wie es in Fig. 2 durch Pfeile 27 verdeutlich ist. Diese Strömungen werden im hinteren Randbereich der Seitenwände 19 plötzlich umgelenkt, wodurch Stromschnellen entstehen, die zu den vorgenannten Schwierigkeiten führen.

Zu diesen Schwierigkeiten trägt auch das Vorhandensein des Deckels 13 bei, an dessen unterem Bereich die Flüssigkeit vorbeiströmt und deshalb besondere Wirbelströme entstehen, die sich beim Ablösen der Strömung vom Deckel 13 bilden.

Im Rahmen der Erfindung ist es auch möglich, gemäß Fig. 3 die einander zugewandten Flächen der Vorsprünge 22 eben (links dargestellt) oder konkav gerundet (rechts dargestellt) in die Seitenwände 19 auslaufen zu lassen, wodurch sich eine verhältnismäßig weiche Umlenkung der an den Seitenwänden 19 hochschießenden Stromschnellen ergibt.

PATENTANWÄLTE
Dipl.-Ing. H. MITSCHERLICH
Dipl.-Ing. K. GUNSCHMANN
Dipl.-Ing.Dr.rer.nat. W. KÖRBER
Dipl.-Ing J. SCHMIDT-EVERS
Dipl.-Ing. W. MELZER
EUROPEAN PATENT ATTORNEYS

0231871

Telefon (089) 29 66 84-86
Telex 523 155 mitsh d
Telegramme Patentpaap
Telecopier (089) 22 68 31
Psch-Kto. Mchn 195 75-803
EPA-Kto 28 000 206

Steinsdorfstraße 10
D-8000 München 22

Firma ROTPUNKT
Dr. Anso Zimmermann
Industriestraße

6434 Niederaula, bad Hersfeld

27. Januar 1987

Dr. KÖ/Pi/ki

ANSPRÜCHE

1. Kanne mit einem Gehäuse, von dessen Kopfteil ein
Ausgießer ausgeht, und mit einem in das Kopfteil
einsetzbaren Deckel der in seiner Offenstellung
zum Ausgießen nur einen Teil der Füll- und Ausgießöffnung der Kanne freigibt,
dadurch gekennzeichnet,
daß an den oberen Rändern (21) der einander zugewandten
Seitenwände (19) des Ausgießers (4) je ein sich
längs des Randes (21) erstreckender Vorsprung (22)
angeordnet ist.

2. Kanne nach Anspruch 1,
dadurch gekennzeichnet,
daß die Vorsprünge (22) von den Ecken (24) ausgehen,
die durch die Durchdringung zwischen den Seitenwänden
(19) und der Innenwand des Kopfteils (3) gebildet
sind.

3. Kanne nach Anspruch 2,
dadurch gekennzeichnet,
daß die Vorsprünge (22) sich nur über etwa einem
Drittel bis etwa die Hälfte der Länge (L) des Ausgießers
(4) erstrecken.

4. Kanne nach einem der Ansprüche 1 bis 3,
dadurch gekennzeichnet,
daß die Seitenwände (19) sich eben und etwa senkrecht
erstrecken.

5. Kanne nach einem der Ansprüche 1 bis 4,
dadurch gekennzeichnet,
daß die Vorsprünge (22) eine etwa rechteckige Querschnittsform aufweisen.

6. Kanne nach einem der Ansprüche 1 bis 3,
dadurch gekennzeichnet,
daß die Vorsprünge (22) mit ebenen oder konkav gerundeten Flächen schräg abwärts in die Seitenwände (19)
auslaufen.

0231871

FIG.1

FIG.2

FIG.3